# EUROPEAN PATENT APPLICATION

(11) **EP 0 979 764 A1**
(43) Date of publication of application: **16.02.2000**
(21) Application number: 99500144.3
(22) Date of filing: 10.08.1999
(51) Int. Cl.: B61K 9/12, G01B 5/20, B23B 5/28

(54) **Measurement installation and process for lathing parameters of a railway section**

(30) Priority: 12.08.1998 ES 9801743
(71) Applicant: PATENTES TALGO, S.A., 28014 Madrid (ES)
(72) Inventor: Sanchez Revuelta, Angel Luis, Mostoles, Madrid (ES); Gomez Gomez, Carlos Javier, 28014 Madrid (ES)
(74) Representative: Elzaburu Marquez, Alberto

(57) **Abstract**

Measurement installation and process for the lathing parameters of a railway section using a measurement probe (3) fitted on a support block (1), joined to a tool slide (7) of a pit lathe, and a measurement feeler (4) incorporated in the probe and destined to enter into contact with a wheel to be measured. An activation cylinder (2) vertically displaces the probe (3) together with the feeler (4) to a suitable measurement position and a power supply and data output cable (5) joins the probe (3) to the numerical control of the pit lathe. The data obtained by the feeler (4) is displayed on the screen of the numerical control and transmitted to a computer (C) to be ordered and filed by the latter, according to a protocol, the protocolized data then being sent to an external maintenance system. The invention is applicable to railway vehicle wheels.

## Description

### FIELD OF THE INVENTION

The present invention refers to the field of high precision measurement of the rolling parameters in wheels fitted on railway vehicles, before and after the lathing process, performing said measurement on the pit lathe itself or section machining unit.

The following measurements are the most important:
- Thickness of the wheel flange.
- Height of the wheel flange.
- Wheel factor qR.
- Distance between driving faces and distance between inside faces of opposite wheels.

Said measured values are recorded on the lathing card of the corresponding axle, either as "values prior to lathing", if measured prior to the machining process, or as "final lathing values", if measured at the end of the machining process.

The installation object of the invention is incorporated in pit lathes, joined to the same numerical control as the tool slides and governed by said control. The data is obtained and processed by the numerical controls which in turn, dump them in a computer, for example a PC, to organize them in a database and obtain lathing cards.

### BACKGROUND OF THE INVENTION

The prior art has already catered for measurement of rolling parameters on "pit lathes". An example of measurement of these parameters may be found in the document EP-A-0 751 371 of the present applicant.

Nevertheless, the technological principles on which this invention is based differ from those used until now, in the sense that the same control component records all the described values, is directly governed by the numerical control and its values are recorded therein. The fact of being governed by the same numerical control as the tool contributes significant precision to the system.

### SUMMARY OF THE INVENTION

The invention basically consists of a pneumatically or hydraulically activated measurement probe as required by the operator, from the numerical control itself. Once the probe has been implemented, a "measurement" sub-programme is executed on the operator's request, being possible to modify this sub-programme according to the type of section to be measured. By means of this operation, the probing head or probe point touches with accuracy different points of the section obtaining measurements in the numerical control with the same precision as that executed during machining, due to the fact that the same components executing machining, that is, motors, screws, coders, are governed by the "measurement sub-programme".

In the numerical control there may be as many measurement sub-programmes as machining programmes, such that the measurement programme univocally joins the machining programme, creating a "whole" within the regeneration system of the rolling band.

The measurement values are recorded on special numerical control screens called "measurement screens" and in turn, these data are transmitted to a computer, for example a PC, which suitably orders these measurements in a database and prepares the lathing report. This report is customized and may be exported from the computer to an own external maintenance system of the corresponding railway administration.

The entire system is checked by means of a "calibration" subroutine and a failure warning programme is established, including lack of pneumatic or hydraulic pressure incorporated to the failure diagnosis system of the pit lathe.

### BRIEF DESCRIPTION OF THE DRAWINGS

The invention may be described in greater detail by referring to the attached drawings in which:
- Figure 1 shows the basic measuring head incorporated in the pit lathe tool slide and,
- Figure 2 shows the arrangement of the two left and right measurement heads, with respect to the axle to be measured and machined, as well as their union with the numerical control and the PC governing the installation.

### DETAILED DESCRIPTION OF THE INVENTION

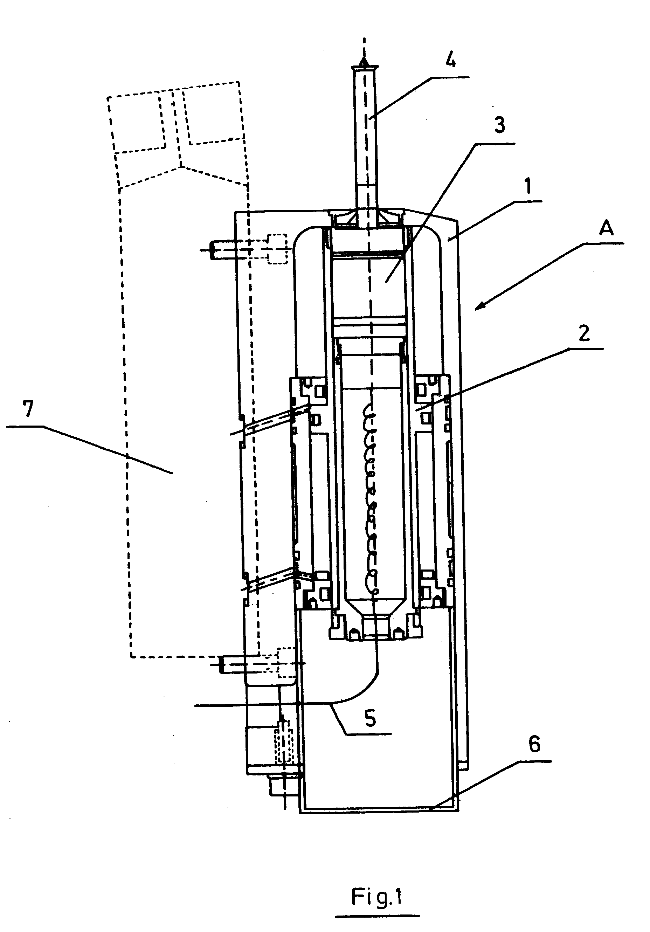

Firstly, regarding Figure 1, it may be observed that the installation of the invention, referred to as a whole with A, comprises a support block 1 serving to support a measurement probe 3 joined to the tool slide 7 of the pit lathe, the measurement probe 3 having a feeler or a probing head 4. An activation cylinder 2, that may be pneumatic or hydraulic (in this case a pneumatic cylinder has been selected) serves to activate the measurement probe 3, to which a supply and data output cable 5 is connected. In the lower part of support block 1, a cowling 6 has been provided to protect the sensitive parts of the installation of the invention.

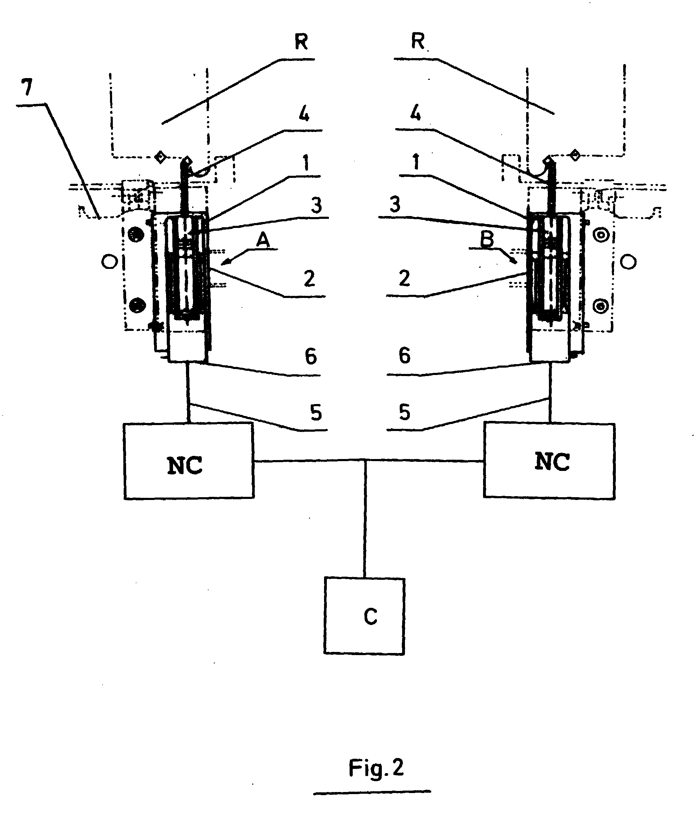

In Figure 2, the equipment described in Figure 1 is duplicated, being appreciated how the feeler 4 is applied to the section of a wheel R.

The operation of the installation of the invention will be described now with reference to Figure 2 of the drawings. For this purpose, the numerical control NC of the pit lathe is set in the "measurement" operation mode and the measurement probe 3 is activated making said probe 3 and the feeler 4 to move vertically until a stop by means of the pneumatic cylinder 2.

Then, the "measurement sub-programme" is activated by which the feeler 4 touches the wheel R section in several points, sending the measured coordinates with the own coders of the X and Z axes of the tool slide 7 to the numerical control NC by means of the electric connection cable 5.

This process is independently repeated in each one of the measurement equipment marked with A and B in Figure 2.

The data obtained in measurement equipment A and B is indicated on the screens of the numerical controls NC and transmitted to the computer C, for example a PC, which orders and files them according to a protocol. The measurements already protocolized may be sent to an external system (maintenance system).

All the process is carried out with the wheel supported on the pit lathe and without it rotating.

If after measuring it were necessary to remachine the part, references would be stored in the computer, which performs the measurement process, such that the invention may be applied not only at the beginning and end of machining, but also in any intermediate process.

As may be interpreted from the above, the invention permits the machining tool slides 7 to be provided with a system making it possible to measure the section parameters indicated previously, during and after machining, provided the wheel R is stopped. Moreover, according to the invention, the measurements are made with the own equipment of the pit lathe, provided with numerical controls NC with their measurement and control cards and their special measurement screens, as well as their drives, that is, motors, screws and coders pertaining to the machining. Moreover, the invention provides a programme for communication of the numerical control NC with the computer C and a data processing programme in the computer, as well as the export of data to an external system.

Although in the above, the essential characteristics of the invention have been gathered, experts in the art will understand that the measurement installation and process described may be varied and modified. For this reason, it is intended that the scope of the invention is only defined by the contents of the attached claims.

## Claims

1. A measurement installation for the lathing parameters of a railway section of the type permitting high precision measurement of the rolling parameters in wheels (R) fitted on railway vehicles, before and after the lathing process, performing said measurement over a pit lathe or a unit for machining profiles, while the wheel is supported without rotating on the pit lathe or in said machine and being included among said rolling parameters, measurements of the wheel flange thickness and height, the factor qR of the wheel and the distances between driving faces and the internal faces of opposite wheels (R), characterized in that it comprises, for each wheel (R) to be measured, a measurement probe (3) fitted on a support block (1) joined to a tool slide (7) of the lathe; a feeler or probing head (4) incorporated in the measurement probe (3) and destined to enter in contact with the wheel (R) to be measured; an activation cylinder (2) destined to vertically displace the probe (3) together with the feeler (4) until a suitable measurement position; a supply and data output cable (5) joining the probe (3) to the numerical control (NC) of the pit lathe and which receives the data obtained by the feeler (4), this being displayed on the screen of the numerical control (NC) and transmitted to a computer (C) to be ordered and filed by the latter according to a protocol and afterwards, the protocolized data being sent to an external maintenance system; and a cowling (6) arranged on the lower part of the support block (1) to protect the sensitive parts of the measuring equipment.

2. An installation according to claim 1, characterized in that the cylinder (2) is a pneumatic cylinder.

3. An installation according to claim 1, characterized in that the cylinder (2) is an hydraulic cylinder.

4. An installation according to claims 1 to 3, characterized in that the computer (C) is a personal computer (PC).

5. A measurement process for the lathing parameters of a railway section, wherein the installation is used according to the preceding claims 1 to 4, characterized in that it comprises the steps of setting the numerical control (NC) in the "measurement" operation mode; activating the measurement probe (3) to caube it and the feeler (4) to be displaced by the cylinder (2) to a suitable measurement position; activating a "measurement sub-programme" to make the feeler (4) touch the wheel (R) section at several points to be measured and send the coordinates obtained with the X and Z axis coders of the tool slide (7) to the numerical control (NC) by means of the electric connection cable (5); indicating the data obtained on the screen of the numerical control (NC) and transmitting it to the computer (C) to order and file it according to a protocol; and, optionally, sending the protocolized measurement data to an external maintenance system.
